(19) Europäisches Patentamt
European Patent Office
Office européen des brevets

(11) Numéro de publication: **0 415 855 A1**

# (12) DEMANDE DE BREVET EUROPEEN

(21) Numéro de dépôt: **90420335.3**

(51) Int. Cl.5: **C08G 79/08**, C04B 35/58

(22) Date de dépôt: **12.07.90**

(30) Priorité: **10.08.89 FR 8910939**

(43) Date de publication de la demande:
**06.03.91 Bulletin 91/10**

(84) Etats contractants désignés:
**AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Ardaud, Pierre**
**133 avenue Clémenceau**
**F-69110 Sainte Foy-les-Lyon(FR)**
Inventeur: **Mignani, Gérard**
**2 avenue des Frères Lumière**
**F-69008 Lyon(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex(FR)**

## (54) Précurseur céramique organométallique à base de bore d'azote et de silicium.

(57) La présente invention concerne un procédé de préparation d'un polymère à base de bore, d'azote et de silicium comportant la réaction d'un mélange de trihalogénoborane, de disilazane et de B-trichloroborazine.

L'invention vise également l'utilisation des polymères obtenus, à l'obtention de céramiques, en particulier de fibres céramiques, par pyrolyse de ces polymères, à une température comprise entre 1 000 et 2 000 °C.

EP 0 415 855 A1

## PRECURSEUR CERAMIQUE ORGANOMETALLIQUE A BASE DE BORE D'AZOTE ET DE SILICIUM

L'invention a trait à l'utilisation de polymères organométalliques à base de bore et d'azote comme précurseurs de céramiques par pyrolyse de ces polymères à une température comprise entre 1 000 et 2 000 °C.

Elle concerne donc, à titre d'application, l'utilisation de ces polymères pour la fabrication de produits et articles céramiques à base de nitrure de bore, notamment sous forme de fibres.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connait à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives. Toutefois, les pièces obtenues présentent une microporosité qui peut être très génante pour certaines applications.

Plus récemment, on a découvert qu'il était possible de préparer du nitrure de bore par pyrolyse de polymères précurseurs.

L'intérêt de la voie polymère réside surtout dans les possiblités de mise en forme de ce type de produit, et plus particulièrement pour l'obtention, après pyrolyse, de fibres à base de nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970 °C, à des fibres de nitrure de bore.

Toutefois, le composé cyclique de départ décrit dans ce document est très difficile à préparer, donc coûteux, et, de ce fait, ne peut guère laisser espérer d'application à l'échelle d'une production industrielle.

Dans la demande de brevet français 2 620 455 on utilise comme polymère précurseur le produit de réaction d'un mélange de trihalogénoborane et d'un composé présentant au moins un atome de bore sur lequel sont directement liés deux atomes d'halogène, sur un composé comprenant au moins un groupe $NH_2$.

A partir de ce polymère précurseur, la demande de brevet français 2 620 443 enseigne que la pyrolyse de ce précurseur sous ammoniac conduit à un produit céramique essentiellement à base de nitrure de bore.

La publication de K.A. ANDRIANOV, Bulletin of the Academy of Science, USSR, 1962, 3 , P. 1757-1758 enseigne un procédé consistant à introduire un trihalogénoborane de formule $BX_3$ dans un hexaalkyldisilazane de formule $(R_3Si)_2NH$ pour conduire à un trialkylsilylaminodihalogénoborane de formule $R_3SiNHBX_2$ ; ce dernier produit n'est qu'un simple monomère organoboré, et il ne peut en aucun cas constituer, en tant que tel, un précurseur de nitrure de bore convenable.

La réaction de trihalogénoborane sur un disilazane est également décrite de façon très générale par EP-A-305 985 enseignant l'utilisation du produit obtenu comme précurseur pour faire des fibres céramisées sous vide ou sous atmosphère inerte. Le produit obtenu possède une température de fusion ajustable selon les conditions opératoires de la réaction mais présente les inconvénients lorsqu' il est transformé thermiquement jusqu'à 1000 °C en matériaux céramiques d'avoir un taux de silicium élevé et d'être peu stable lors d'exposition prolongée à l'air ambiant.

Les demandes de brevets français 88/13 11 déposée le 6 octobre 1988 au nom de la Demanderesse et 89/05 177 déposée le 13 avril 1989 au nom de la Demanderesse, enseignent que cette réaction d'un trihalogénoborane sur un disilazane doit être effectuée dans des conditions particulières de mise en oeuvre, ces conditions étant nécessaires à l'obtention d'un polymère utilisable comme précurseur céramique.

US-A-4 707 556 enseigne l'obtention d'un polymère céramique par réaction de B-trichloroborazine sur un disilazane. Le précurseur obtenu est un solide soluble en particulier dans l'hexane et présente l'inconvénient de posséder une température de fusion non ajustable.

Un but de l'invention est par conséquent d'obtenir un polymère à base de bore, d'azote et de silicium dont les propriétés physico-chimiques sont contrôlables.

Un autre but de l'invention est de proposer un procédé d'obtention de polymère à base de bore, d'azote et de silicium qui, lorsqu'il est pyrolysé à 1000 °C, donne un matériau céramique à faible teneur en silicium.

Ces buts et d'autres sont atteints par la présente invention qui concerne en effet un procédé de préparation d'un polymère à base de bore, d'azote et de silicium comportant la réaction d'un mélange d'au

moins un trihalogénoborane A, d'au moins un disilazane B et d'au moins un B-trichloroborazine C.

Le trihalogénoborane A de départ répond à la formule :

$BX_3$ (1)

dans laquelle X est un halogène choisi parmi le chlore, le brome, l'iode et le fluor. De préférence X est le chlore.

Le disilazane B de départ répond à la formule :

$(R_3Si)_2NH$ (2)

dans laquelle les radicaux R, identiques ou différents, sont choisis parmi l'hydrogène et un radical hydrocarboné, sous réserve qu'il n'y ait pas plus d'un atome d'hydrogène lié directement à un atome de silicium.

Les radicaux hydrocarbonés A préférés sont les radicaux alkyles, cycloalkyles, alcènyles, aryles, alkylaryles et arylalkyles, ayant au plus 10 atomes de carbone.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. Comme radical alcènyle : le radical vinyle. A titre de radicaux aryles les radicaux phényle et naphtyle de radicaux alkylaryles : les radicaux tolyle et xylyle et enfin de radicaux arylalkyles : les radicaux benzyle et phényléthyle.

Des exemples de composés disilazanes, pris seuls ou en mélange, envisagés par l'invention sont :

$\{(CH_3)_3Si\}_2NH$, $\{C_6H_5(CH_3)_2Si\}_2NH$,

$$\{(C_6H_5)_2CH_3Si\}_2NH,\quad \{(CH_3)_2\overset{\overset{H}{|}}{Si}\}_2NH,$$

$\{(CH_3)_2(CH_2 = CH)Si\}_2NH$.

Selon un mode préférentiel de réalisation de l'invention, on utilise des hexaalkyldisilazanes seuls ou en mélange avec des tétraalkyldialcényldisilazanes.

La B-trichloroborazine C de départ répond à la formule :

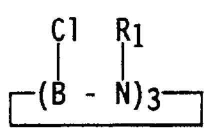

(3)

dans laquelle $R_1$ est choisi parmi un atome d'hydrogène et un radical alkyle ayant de 1 à 6 atomes de carbone.

De préférence les produits de départ A, B et C sont mis en oeuvre suivant les rapports molaires :

$$0,1 < A/C < 10, \quad \text{de préférence } 0,5 < A/C < 2$$

$$1 < \frac{B}{A + C} < 12, \quad \text{de préférence} \quad 5 < \frac{B}{A + C} < 8$$

La réaction peut avoir lieu à la pression atmosphérique, bien que des pressions inférieures ou supérieures ne soient bien évidemment pas exclues.

La réaction entre A, B et C peut être opérée en masse ou, de préférence, en solution dans un solvant organique de type aprotique (hexane, pentane, toluène, chlorobenzène, etc...) et sous conditions anhydres.

La température du mélange réactionnel n'est pas un paramètre critique, elle peut être comprise entre -50 °C et la température de reflux du solvant utilisé.

Il peut être également avantageux, pour mieux structurer le polymère formé et augmenter ainsi les rendements lors de la pyrolyse ultérieure, de chauffer le milieu réactionnel, par exemple en le portant à la température de reflux du solvant, et ceci sur une durée pouvant aller de quelques minutes à plusieurs heures. Toutefois ce traitement thermique n'est, la plupart du temps, pas nécessaire.

A l'issue de cette étape réactionnelle, on sépare le polymère du milieu de réaction, et ceci par tout

moyen connu en soi, par exemple par filtration sous atmosphère inerte, ou bien encore par extraction et décantation au moyen notamment d'ammoniac liquide.

Le polymère ainsi récupéré, après éventuellement élimination du solvant (distillation ou autre), puis séchage, constitue alors le précurseur polymère qui peut être pyrolysé.

Eventuellement, on peut, dans une étape ultérieure, traiter le polymère ainsi obtenu dans le but de réduire encore sa teneur en chlore résiduel. Le traitement consiste alors à mettre en contact ledit polymère, en masse ou de préférence en milieu solvant organique anhydre (hexane, pentane, toluène,...), avec un composé présentant au moins un groupement $NH_2$ et ci-après dénommé agent d'aminolyse.

Parmi les agents d'aminolyse pouvant être utilisés, on peut citer l'ammoniac, les amines primaires, les diamines (hydrazine, alkylhydrazine, hydrazide, alkylenediamine...), les amides, les silylamines, etc...

On utilisera de préférence des composés qui répondent à la formule (4) suivante :

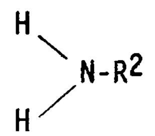

(4)

dans laquelle le radical $R^2$ est choisi parmi l'atome d'hydrogène, les radicaux hydrocarbonés et les radicaux silylés. Conviennent ainsi plus particulièrement :

- l'ammoniac ($R^2$ = atome d'hydrogène)
- les organoamines primaires ($R^2$ = radical alkyle, cycloalkyle, aryle, alkylaryle ou arylalkyle), telles que par exemple la méthylanine, l'éthylamine, la propylamine, la butylamine, la pentylamine, l'hexylamine, l'heptylamine et l'octylamine, la cyclopropylamine, la phénylamine...
- les silylamines, et plus particulièrement les triorganosilylamines comme la (triéthylsilyl)amine, ou bien encore les hydrogénoorganosilylamines comme l'(hydrogénodiméthylsilsyl)amine.

Les agents d'aminolyse préférés sont les alkylamines primaires et l'ammoniac.

Selon un mode de mise en oeuvre encore plus préféré, on opèrera avec l'ammoniac.

Les produits de départ A, B, C peuvent être introduits dans le réacteur, dans un ordre quelconque. Il est toutefois recommandé de partir de C, de préférence en solution dans un solvant organique, à une température de préférence inférieure à -20 °C. On introduit alors par bullage (si c'est un gaz) le produit A.

Tout en maintenant le mélange de A et C à une température de préférence inférieure à -20 °C, on coule lentement le composé B. De préférence le temps de coulée est compris entre 10 minutes et 5 heures. En fin d'addition de 8 on laisse le mélange réactionnel revenir à la température ambiante (20 °C) et on sépare le polymère obtenu en éliminant le solvant.

Les polymères à base de bore, d'azote et de silicium susceptibles d'être obtenus selon l'invention présentent une masse molaire moyenne en nombre ( $\overline{M}$ n) qui peut être comprise entre 400 et 10 000, et de préférence comprise entre 600 et 5 000.

Ils présentent d'autre part une masse molaire moyenne en poids ( $\overline{M}$ w) pouvant s'étaler entre 600 et 100 000, et de préférence entre 700 et 10 000. L'indice de polydispersité (Ip) est comprise entre 1,1 et 3 généralement.

Suivant les conditions de mise en oeuvre du procédé décrit ci-avant, les polymères selon l'invention peuvent se présenter, à température ambiante, sous une forme allant d'une huile peu visqueuse à très visqueuse jusqu'à l'état solide.

Les polymères selon l'invention sont de plus fusibles et solubles dans la plupart des solvants organiques usuels (hexane, toluène,...), leur température de fusion pouvant être contrôlée par les conditions de mise en oeuvre du procédé, ce qui peut être très avantageux sur le plan de leur possibilité de mise en forme.

Les analyses spectrales démontrent que le polymère selon l'invention est bien un terpolymère et non pas un mélange de deux polymères résultant d'une part de la réaction de A sur B et d'autre part de la réaction de B sur C.

Le polymère selon l'invention, après fusion éventuelle si il est à l'état solide à température ambiante, est directement filable en filaments dont le diamètre peut être compris entre 10 et 40µm par exemple.

Le fil obtenu est alors rendu infusible avant d'être pyrolysé à une température comprise entre 300 et 1 800 °C sous vide, en atmosphère inerte (azote, argon) au sous ammoniac en vue de sa transformation en nitrure de bore.

Le fil est rendu infusible après céramisation notamment par traitement thermique, par action de l'eau, de l'ammoniac, d'un rayonnement UV, d'un faisceau d'électrons ou par une combinaison de ces moyens.

Les fibres céramiques obtenues peuvent alors servir de structure de renforcement pour des matériaux composites du type céramique/céramique, céramique/métal ou céramique/plastique.

Dans le cas le plus général (obtention de poudres) on pyrolyse directement le polymère dans les mêmes conditions que pour les fibres jusqu'à ce que le polymère soit converti entièrement en céramique à base de nitrure de bore.

Les matériaux céramiques ainsi obtenus présentent un taux de silicium peu élevé compris entre environ 0,1 et 3% massique.

Les exemples suivants illustrent l'invention sans en limiter la portée.

Dans ces exemples :

$\overline{M}$ n est la masse moléculaire moyenne en nombre,
$\overline{M}$ w est la masse moléculaire moyenne en poids,
Ip est l'indice de polydispersité,
TGA est l'analyse thermogravimétrique.

Les pourcentages sont donnés en poids, sauf mentions contraires.

- EXEMPLE 1 ($BCl_3$ + $\{BCl\text{-}NH\}_3$ + HMDZ)

Dans un réacteur de 1 litre sous azote, on charge 700 ml de toluène sec et 20,3 grammes de B-trichloroborazine (0,11 mole).

Après refroidissement à -30 °C, 12,9 grammes (0,11 mole) de trichlorure de bore sont introduits par bullage dans le réacteur.

On coule ensuite en 50 minutes, 106,5 grammes d'hexaméthyldisilazane (0,66 mole), la température du milieu réactionnel étant maintenue autour de -30 °C. En fin d'addition, le mélange est laissé sous agitation pendant 1 heure en laissant la température remonter jusqu'à l'ambiante.

Après filtration sous azote, la solution limpide et incolore ainsi obtenue, est évaporée pour conduire à 36 grammes de polymère se présentant sous la forme de mousses blanches.

Les caractéristiques du polymère obtenu sont les suivantes : - produit très soluble dans le toluène,
- température de ramollissement = 95 °C,
- fusion du produit à 110 °C en formant des fils à l'étirage,
- $\overline{M}$ n = 1 120,
- $\overline{M}$ w = 3 880,
- Ip = 3,45
- TGA = 32,7 de résidu à 850 °C sous hélium.

Un échantillon de ce produit est pyrolysé sous ammoniac jusqu'à 1 000 °C pour donner une céramique blanche très dure et frittée : majoritaire en BN.
- les analyses IR, Raman sur l'échantillon pyrolysé à 1 000 °C montrent que la céramique obtenue est essentiellement formée de nitrure de bore BN,
- rendement de pyrolyse = 28,94 %,
- taux de Cl résiduel <0,2 %.
- taux de Si = 1,4 %.

- EXEMPLE COMPARATIF 2 ($BCl_3$ + HMDZ) :

Dans un réacteur de 1 litre sous azote, on charge 630 ml de toluène sec, puis après refroidissement à -30 °C, 26 grammes (0,22 mole) de trichlorure de bore sont introduits par bullage dans le réacteur.

On coule ensuite en 65 minutes, 107 grammes d'hexaméthyldisilazane (0,66 mole), la température du milieu réactionnel étant maintenue autour de -25 °C. En fin d'addition, le mélange est laissé sous agitation pendant 1 heure 30 minutes en laissant la température remonter jusqu'à l'ambiante.

Après filtration sous azote, la solution ainsi obtenue, est évaporée pour conduire à 23 grammes d'huile très fluide légèrement blanche.

Les caractéristiques du polymère obtenu sont les suivantes : - TGA = 17,3 % de résidu à 850 °C sous hélium.

Un échantillon de ce produit est pyrolysé sous ammoniac jusqu'à 1000 °C pour donner une céramique dont le taux de Si est de 5,5 %.

- EXEMPLE COMPARATIF 3 ($\{BCl-NH\}_3$ + HMDZ) :

Dans un réacteur de 1 litre sous azote, on charge 620 ml de toluène sec et 41 grammes de B-trichloroborazine (0,22 mole). Après refroidissement à -25 °C, on coule ensuite en 20 minutes, 107,7 grammes d'hexaméthyldisilazane (0,67 mole), la température du milieu réactionnel étant maintenue autour de -25 °C. En fin d'addition, le mélange est laissé sous agitation pendant 2 heures en laissant la température remonter jusqu'à l'ambiante.

Après filtration sous azote, la solution limpide et incolore ainsi obtenue, est évaporée pour conduire à 45 grammes de polymère se présentant sous la forme de mousses blanches.

Les caractéristiques du polymère obtenu sont les suivantes :

- température de ramollissement 200 °C,
- fusion du produit à 240 °C donnant une pâte molle,
- TGA = 43,7 % de résidu à 850 °C sous hélium.

Un échantillon de ce produit est pyrolysé sous ammoniac jusqu'à 1000 °C pour donner une céramique majoritaire en BN :

- rendement de pyrolyse = 37,5 %,
- taux de Si = 3,4 %.

- EXEMPLE 4 :

Dans un réacteur de 1 litre séché sous azote, on charge :

- 10,5 grammes du polymère obtenu dans l'exemple 2,
- 10,8 grammes du polymère obtenu dans l'exemple 3,

puis on rajoute 100 ml de toluène pour homogénéiser le mélange. Après dissolution totale des produits, le solvant est évaporé pour conduire à 19,7 grammes d'un solide collant très hétérogène (pertes de 1,58 g lors de l'évaporation).

TGA du mélange ainsi obtenu = 38,5 % à 850 °C sous hélium.

- EXEMPLE 5 :

Dans un réacteur de 0,5 litre séché sous azote, on charge 300 ml de toluène sec et 29.9 grammes de B-trichloroborazine (0,162 mole) ainsi que 6,3 grammes de trichloroborane (0,054 mole).

On introduit en 1 heure 104,6 g d'hexaméthyldisilazane (0,648 mole) en maintenant une température de - 20 °C dans le milieu réactionnel.

En fin de réaction, la solution est filtrée puis évaporée pour conduire à 32,4 g de solide blanc.

Ce produit est pyrolysé sous ammoniac jusqu'à 1000 °C pour donner une céramique majoritaire en BN :

- rendement de pyrolyse = 37,62 %,
- taux de Si = 2,68 %.

- EXEMPLE 6 :

Le mode opératoire est identique à celui de l'exemple 5, on introduit :

- 9,75 g (0,053 mole) de B-trichloroborazine,
- 18,6 g (0,159 mole) de trichloroborane,
- 102,6 g (0,636 mole) d'hexaméthyldisilazane,
- 300 ml de toluène sec.

On obtient 24,7 g d'une gomme friable dont la température de ramollissement est de 200 °C.

Le mode opératoire de la pyrolyse est identique à celui de l'exemple 5.

- rendement de pyrolyse = 36,29 %.
- taux de Si = 0,80 %.

- EXEMPLE 7 :

Le mode opératoire est identique à celui de l'exemple 5, on introduit dans un réacteur de 2 litres :
- 11 g (0,094 mole) de trichloroborane,
- 17,3 g (0,094 mole) de B-trichloroborazine,
- 91 g (0,564 mole) d'hexaméthyldisilazane, - 800 ml de toluène sec.

On obtient 31,2 g d'un produit solide dont la température de ramollissement est de 95° C.

Le mode opératoire de la pyrolyse est identique à celui de l'exemple 5.
- rendement de pyrolyse = 35,19 %,
- taux de Si = 1,45 %.

- EXEMPLE 8 :

Le mode opératoire est identique à celui de l'exemple 5, on introduit dans un réacteur de 2 litres :
- 41 g (0,35 mole) de trichloroborane,
- 7,1 g (0,039 mole) de B-trichloroborazine,
- 188,4 g (1,17 mole) d'hexaméthyldisilazane,
- 630 ml de toluène sec.

On obtient 41 g d'un produit gommeux.

Le mode opératoire de la pyrolyse est identique à celui de l'exemple 5.
- rendement de pyrolyse = 25,66 %,
- taux de Si = 0,43 %.

- EXEMPLE 9 :

Synthèse du polymère :

Le mode opératoire est identique à celui de l'exemple 5, on introduit dans un réacteur de 0,5 litre :
- 36,8 g (0,314 mole) de trichloroborane,
- 14,46 g (0,078 mole) de B-trichloroborazine,
- 189,8 g (1,18 mole) d'hexaméthyldisilazane,
- 400 ml de toluène sec.

On obtient 45,5 g d'une huile visqueuse.

Ce produit subit un traitement thermique sous vide pour améliorer ses propriétés physico-chimiques, la températue du traitement est de 200° C, sa durée est de 4 heures, sous une pression de 0,5 kPa.

On obtient un produit solide de température de ramollissement égale à 115° C, de température de fusion égale à 150° C, ce qui permet son filage.

Filage et pyrolyse du polymère :

Le produit obtenu est filé par extrusion sous forme de fibres à 7 filaments de 25 à 35 µm de diamètre, puis la fibre est bobinée.

Ces fibres sont rendues infusibles par un traitement à l'ammoniac.

Ces fibres sont alors pyrolysées sous ammoniac à 1000° C pour donner des fibres à 7 filaments de 7,5 à 12 µm de diamètre majoritaire en BN.

Rendement de la pyrolyse des fibres ≃ 32 %.

- EXEMPLE 10 :

Dans un réacteur de 3 litres à double enveloppe, on charge une solution de 15,7 g (0,85 mole) de B-trichloroborazine dans 758,9 g de toluène sec.

On refroidit à - 30° C, puis on introduit 10,03 g (0,085 mole) de trichloroborane.

Ensuite on introduit goutte à goutte en 1 heure un mélange de :
- 65,85 g (0,408 mole) d'hexaméthyldisilazane,
- 18,91 g (0,102 mole) de tétraméthyldivinyldisilazane,

en maintenant la température entre - 25° C et - 23° C.

On laisse ensuite 1 heure à la température ambiante puis on filtre. On récupère une solution limpide. Après évaporation du solvant sous vide, on maintient le produit à 60° C pendant 1 heure sous une pression de 0,67 kPa. On récupère alors 23 g d'une poudre blanche :

- température de ramollissement : 110° C,
- température de fusion : 180° C.

Le produit est pyrolysé sous ammoniac selon les conditions suivantes :

- de 25° C à 400° C : 1° C/min (palier d'1 heure),
- de 400° C à 1000° C : 3° C/min (palier de 3 heures).

On obtient une céramique totalement blanche avec un rendement de 37,07 %.

Les analyses IR, Raman et les microanalyses confirment la formation d'une céramique majoritaire en nitrure de bore.

## Revendications

1. - Procédé de préparation d'un polymère à base de bore, d'azote et de silicium, caractérisé en ce qu'il comporte la réaction d'un mélange d'au moins un trihalogénoborane A, d'au moins un disilazane B et d'au moins un B-trichloroborazine C,
le trihalogénoborane A répond à la formule :
$BX_3$ (1)
dans laquelle X est un halogène choisi parmi le chlore, le brome, l'iode et le fluor,
le disilazane B répond à la formule :
$(R_3Si)_2NH$ (2)
dans laquelle les radicaux R, identiques ou différents, sont choisis parmi l'hydrogène et un radical hydrocarboné, sous réserve qu'il n'y ait pas plus d'un atome d'hydrogène lié directement à un atome de silicium,
la B-trichloroborazine répond à la formule :

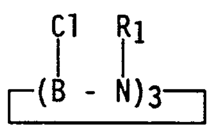 (3)

dans laquelle $R_1$ est choisi parmi un atome d'hydrogène et un radical alkyle ayant de 1 à 6 atomes de carbone.

2. - Procédé selon la revendication 1, caractérisé en ce que les produits de départ A, B, C sont mis en oeuvre suivant les rapports molaires :

$$0,1 < A/C < 10$$

$$1 < \frac{B}{A + C} < 12,$$

3. - Procédé selon la revendication 1, caractérisé en ce que les produits de départ A, B, C sont mis en oeuvre suivant les rapports molaires :

$$0,5 < A/C < 2$$

$$5 < \frac{B}{A + C} < 8$$

4. - Procédé selon l'une des revendications 1 à 3, caractérisé en ce que la réaction est effectuée en

solution dans un solvant organique de type aprotique.

5. - Procédé selon l'une quelconque des revendications 1 à 4, caractérisé en ce que 8 est un mélange d'hexaalkyldisilazane et de tétraalkyldisilazane.

6. - Procédé selon l'une quelconque des revendications 1 à 4, caractérisé en ce que A est $BCl_3$ et B est l'hexaméthyldisilazane et C a pour formule :

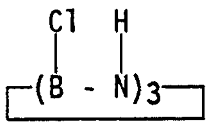

7. - Procédé selon l'une quelconque des revendications précédentes, caractérisé en ce que le polymère susceptible d'être obtenu par un procédé selon l'une quelconque des revendications précédentes est traité par un agent d'aminolyse.

8. - Utilisation d'un polymère susceptible d'être obtenu par un procédé selon l'une quelconque des revendications 1 à 7 pour la préparation de poudre ou fibre céramique à base de nitrure de bore, par pyrolyse dudit polymère.

Office européen des brevets

# RAPPORT DE RECHERCHE EUROPEENNE

Numéro de la demande

**EP 90 42 0335**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 310 462 (RHONE-POULENC CHIMIE)<br>* le document en entier * | 1-8 | C 08 G 79/08<br>C 04 B 35/58 |
| A | GB-A-2 163 761 (I. TANIGUCHI et al.)<br>* page 1, lignes 49-56; page 2, lignes 17-19,29-32; exemples * | 1-8 | |
| D,A | US-A-4 581 468 (K.J.L. PACIOREK et al.)<br>* le document en entier * | 1-8 | |
| A | EP-A-0 305 985 (WACKER)<br>* colonne 2, lignes 15-20; revendications * | 1-8 | |

DOMAINES TECHNIQUES RECHERCHES (Int. Cl.5)

C 04 B
C 08 G

Le présent rapport de recherche a été établi pour toutes les revendications

| Lieu de la recherche | Date d'achèvement de la recherche | Examinateur |
|---|---|---|
| Berlin | 05 novembre 90 | HOEPFNER W.W.G. |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention

E: document de brevet antérieur, mais publié à la date de dépôt ou après cette date
D: cité dans la demande
L: cité pour d'autres raisons

&: membre de la même famille, document correspondant